# EUROPÄISCHE PATENTANMELDUNG

(11) **EP 4 520 159 A1**
(43) Veröffentlichungstag der Anmeldung: **12.03.2025**
(21) Anmeldenummer: 24190213.9
(22) Anmeldetag: 23.07.2024
(51) Int. Cl.: A01F 15/07

(54) **RUNDBALLENPRESSE**

(30) Priorität: 07.09.2023 DE 102023124111
(71) Anmelder: Usines CLAAS France S.A.S, 57140 St. Rémy / Woippy (FR)
(72) Erfinder: Batancourt, Grégory, 57130 Vionville (FR); Vagnier, Vincent, 55160 TRESAUVAUX (FR); Laruelle, Thibault, 57130 Ars sur Moselle (FR)
(74) Vertreter: CLAAS Gruppe

(57) **Zusammenfassung**

Die vorliegende Erfindung betrifft eine Rundballenpresse (2) mit einer in einem Gehäuse (4) der Rundballenpresse (2) angeordneten Presskammer (3), zum Pressen von Rundballen (5) aus einem Erntegut, einer Bindeeinrichtung (12) zum Bereitstellen eines Bindematerials (11) zum Binden eines Rundballens (5) in der Presskammer (3), wobei umfangsseitig der Presskammer (3) mindestens ein Zuführspalt (14) zum Zuführen des Bindematerials (11) in die Presskammer (3) ausgebildet ist, wobei die Bindeeinrichtung (12) eine Trennvorrichtung (16) umfasst, welche ein zwischen einer Ruhestellung (R_{M}) und einer Arbeitsstellung (A_{M}) reversibel verlagerbares Messer (17) zum Durchtrennen des Bindematerials (11) aufweist. Die Rundballenpresse (2) ist dadurch gekennzeichnet, dass die Trennvorrichtung (16) eine mit dem Messer (17) gekoppelte Verstellvorrichtung (18) mit einem Aktuator (19) zum reversiblen Verlagern des Messers (17) zwischen der Ruhestellung (Rnn) und der Arbeitsstellung (A_{M}) umfasst.

## Beschreibung

Die vorliegende Erfindung betrifft eine Rundballenpresse gemäß dem Oberbegriff des unabhängigen Patentanspruchs 1.

Herkömmliche Rundballenpressen weisen sogenannte Mittel zum Aufnehmen und Fördern auf, die das Erntegut vom Boden einer landwirtschaftlichen Fläche aufnehmen und in eine Presskammer der Rundballenpresse fördern, in der das Erntegut zu einem Rundballen geformt wird. Das Pressengehäuse der Rundballenpresse weist ein feststehendes Pressengehäuseteil und eine an dem feststehenden Pressengehäuseteil schwenkbar gelagerte Auswurfklappe auf. Das Pressengehäuse umgibt die Presskammer, wobei diese durch Pressmittel, insbesondere in Gestalt von Presswalzen oder Pressriemen, definiert wird, indem diese die Presskammer umfangsseitig begrenzen. Mittels der Pressmittel wird das über die Mittel zum Aufnehmen und Fördern in die Presskammer geförderte Erntegut zu einem Rundballen geformt. Bevor der in der Presskammer geformte bzw. gepresste Rundballen über ein Öffnen der Auswurfklappe aus der Rundballenpresse ausgeworfen wird, wird dieser in der Presskammer mit Bindematerial umhüllt, welches sich auf einer Bindematerialvorratsrolle befindet, die in einer außerhalb der Presskammer ausgebildeten Bindeeinrichtung angeordnet ist. Das Bindematerial wird mittels der Bindeeinrichtung über einen Zuführspalt der Presskammer zugeführt und kann als Folie, Netz und/oder dergleichen, ausgeführt sein.

Nachdem der Bindevorgang des Rundballens in der Presskammer abgeschlossen ist und der Rundballen aus der Presskammer ausgeworfen werden kann, muss das von der Bindematerialvorratsrolle bereitgestellte Bindematerial durchtrennt werden. Hierbei ist ein möglichst sauberes Durchtrennen wesentlich, damit das Bindematerial für einen Bindevorgang eines weiteren in der Presskammer geformten bzw. gepressten Rundballens erneut zuverlässig über den Zuführspalt in die Presskammer eingeführt werden kann. Damit ein solches Durchtrennen erfolgen kann umfasst die Bindeeinrichtung einer Rundballenpresse eine Trennvorrichtung. Die Trennvorrichtung umfasst eine Messerleiste, auch vereinfacht als Messer bezeichnet, welche zwischen einer Ruhestellung und einer Arbeitsstellung bewegt werden kann, wobei die Messerleiste das Bindematerial bei einer Bewegung von der Ruhestellung in die Arbeitsstellung, insbesondere bei Erreichen der Arbeitsstellung, durchtrennt. Die Trennvorrichtung kann eine Gegenschneide oder einen Amboss umfassen, auf welchen die Messerleiste in der Arbeitsstellung trifft, wodurch das Bindematerial durchtrennt wird. Auch ist es möglich, dass das Bindematerial von der Bindeeinrichtung derart gespannt wird, dass die Messerleiste das Bindematerial auch ohne eine Gegenschneide oder einen Amboss durchtrennen kann.

Aus der DE 34 18 681 C2 ist in diesem Zusammenhang beispielsweise eine Roll- bzw. Rundballenpresse für landwirtschaftliche Halmgüter mit einer Hüllvorrichtung zum Einhüllen eines Roll- bzw. Rundballens mit einer Mantelbahn (Bindematerial) bekannt. Die Roll- bzw. Rundballenpresse umfasst eine parallel zur Mittelachse eines Pressraumes (Presskammer) angeordnete Vorratsrolle für die Mantelbahn, eine ein- und ausschaltbare Abzugsvorrichtung zum Abziehen der Mantelbahn von der Vorratsrolle und zum Einführen der Mantelbahn in den Pressraum sowie eine Abtrennvorrichtung (Trennvorrichtung) zum Durchtrennen der Mantelbahn zwischen Vorratsrolle und Pressraum. Die Abtrennvorrichtung ist über ein Schaltelement und ein Schrittschaltwerk in Abhängigkeit von der Abzugsvorrichtung schlagartig betätigbar, wobei der Antrieb der Abzugsvorrichtung direkt oder indirekt vom Pressenantrieb angeleitet ist.

Herkömmliche Trennvorrichtungen zum Durchtrennen des Bindematerials nach Abschluss des Bindevorgangs eines Rundballens, wie sie beispielsweise aus der vorstehend angeführten DE 34 18 681 C2 bekannt sind, sind demnach mit einem angetriebenen Arbeitsaggregat der Rundballenpresse, beispielsweise der Bindeeinrichtung, zum Verlagern der Messerleiste zwischen der Ruhestellung und der Arbeitsstellung gekoppelt. Die Messerleiste kann somit nur dann verlagert werden, wenn auch das weitere Arbeitsaggregats, mit dem die Trennvorrichtung gekoppelt ist, angetrieben wird. Mit anderen Worten, die Verlagerung der Messerleiste ist stets abhängig von der Betätigung des weiteren Arbeitsaggregats der Rundballenpresse und kann nie losgelöst von diesem Arbeitsaggregat erfolgen.

Eine solche Kopplung von Trennvorrichtung und weiteren Arbeitsaggregaten zwecks Verlagerung der Messerleiste erlaubt zwar das Durchtrennen des Bindematerials nach Abschluss des Bindevorgangs, schafft jedoch bei während des Bindevorgangs auftretenden Problemen gewisse Herausforderungen. Ein während des Bindevorgangs auftretendes Problem kann beispielsweise sein, dass sich das Bindematerial statt um den Ballen um eine Zuführwalze der Bindeeinrichtung oder ein Pressmittel der Presskammer gewickelt hat. Um ein solches Problem zu beheben und den Rundballen anschließend ordnungsgemäß zu binden, ist es erforderlich die Messerleiste aus der Arbeitsstellung in die Ruhestellung zu verlagern, ohne hierbei das weitere Arbeitsaggregat antreiben zu müssen. Insbesondere bei einer Kopplung der Trennvorrichtung mit der Bindeeinrichtung, wie beispielsweise in der DE 34 18 681 C2 offenbart, ist dies nicht oder nur durch einen manuellen Eingriff des Bedieners in die Trennvorrichtung möglich.

Weiterhin schaffen Trennvorrichtungen, die an weitere Arbeitsaggregate der Rundballenpresse zwecks Verlagerung der Messerleiste gekoppelt sind, eine hohe mechanische Systemkomplexität, da einerseits die Bewegung des weiteren Arbeitsaggregats auf die Trennvorrichtung bzw. die Messerleiste der Trennvorrichtung übertragen und andererseits in die zur Verlagerung erforderliche Bewegung, welche in aller Regel eine Schwenkbewegung ist, umgewandelt werden muss. Eine hohe Systemkomplexität geht in der Regel mit hohen Fertigungskosten einher und schafft gewisse Herausforderungen hinsichtlich der Wartung.

Ausgehend hiervon ist es demnach die Aufgabe der vorliegenden Erfindung die beschriebenen Nachteile des Standes der Technik auszuräumen und insbesondere eine Rundballenpresse mit einer Trennvorrichtung anzugeben, die ein zuverlässiges Durchtrennen des Bindematerials nach Abschluss eines Bindevorgangs eines Rundballens in der Presskammer sicherstellt und dabei kostengünstig ist, wobei eine reversible Verlagerung des Messers der Trennvorrichtung zwischen einer Ruhestellung und einer Arbeitsstellung stets unabhängig von weiteren Arbeitsaggregaten der Rundballenpresse und ohne manuellen Eingriff eines Bedieners in die Trennvorrichtung erfolgen kann.

Diese Aufgabe wird erfindungsgemäß durch die Merkmale des unabhängigen Patentanspruchs 1 gelöst, wobei vorteilhafte Weiterbildungen der erfindungsgemäßen Rundballenpresse Gegenstand der entsprechenden abhängigen Patentansprüche 2 bis 14 sind.

Demnach betrifft die vorliegende Erfindung eine Rundballenpresse mit einer in einem Gehäuse der Rundballenpresse angeordneten Presskammer, zum Pressen von Rundballen aus einem Erntegut, einer Bindeeinrichtung zum Bereitstellen eines Bindematerials zum Binden eines Rundballens in der Presskammer, wobei umfangsseitig der Presskammer mindestens ein Zuführspalt zum Zuführen des Bindematerials in die Presskammer ausgebildet ist. Die Bindeeinrichtung umfasst eine Trennvorrichtung, welche ein zwischen einer Ruhestellung und einer Arbeitsstellung reversibel verlagerbares Messer zum Durchtrennen des Bindematerials aufweist. Die Rundballenpresse ist dadurch gekennzeichnet, dass die Trennvorrichtung eine mit dem Messer gekoppelte Verstellvorrichtung mit einem Aktuator zum reversiblen Verlagern des Messers zwischen der Ruhestellung und der Arbeitsstellung umfasst.

Vorzugsweise ist vorgesehen, dass die Verstellvorrichtung genau einen Aktuator umfasst.

Die Kopplung des Messers mit der erfindungsgemäßen Verstellvorrichtung erlaubt es das Messer reversibel zwischen der Ruhestellung und der Arbeitsstellung zu jedem Zeitpunkt während des Betriebs der Rundballenpresse zu verschwenken. Die Verlagerung des Messers ist weiterhin nicht an die Betätigung andere Arbeitsaggregate der Ballenpresse gekoppelt, sodass ein Betrieb der Trennvorrichtung und ein Betrieb der weiteren Arbeitsaggregate der Rundballenpresse stets losgelöst voneinander erfolgen kann. Tritt während des Bindevorgangs ein Problem auf, so muss der Bediener nicht mehr den Traktor verlassen und sich zur Rundballenpresse bewegen, um manuell, also händisch, das Messer aus der Arbeitsstellung zurück in die Ruhestellung zu verlagern. Vielmehr kann der Bediener unkompliziert eine Ansteuerung des einen Aktuators veranlassen. Die Nutzung von genau einem Aktuator mittels dem das Messer reversibel verlagerbar ist sorgt weiterhin für einen sehr kostengünstigen und einfachen Aufbau des Mechanismus zum Verlagern des Messers. Da die Verstellvorrichtung und somit das Messer der Trennvorrichtung von den weiteren Arbeitsaggregaten der Rundballenpresse entkoppelt sind, müssen keine Bewegungen der weiteren Arbeitsaggregate auf die Trennvorrichtung bzw. das Messer der Trennvorrichtung übertragen werden und dabei noch in die zur Verlagerung des Messers erforderliche Bewegung umgewandelt werden. Auch kann auf die Verwendung von mehreren verschiedenen Aktuatoren verzichtet werden, die jeweils für gewisse Teile der Bewegungsabläufe während des Verlagerungsvorgangs des Messers zuständig sind. Da eine hohe Systemkomplexität und viele Aktuatoren in der Regel mit hohen Fertigungskosten und Anschaffungskosten einhergehen, kann durch die erfindungsgemäße Ausgestaltung der Verstellvorrichtung eine kostengünstige Lösung geschaffen werden, die stets ein zuverlässiges Verlagern des Messers in allen Betriebssituation der Rundballenpresse erlaubt. Ferner erlaubt die erfindungsgemäße Verstellvorrichtung eine unkomplizierte Wartung.

Gemäß einer vorteilhaften Weiterbildung der Erfindung ist vorgesehen, dass die Verstellvorrichtung eine mit dem Aktuator antriebsverbundene Antriebseinheit und eine mit dem Messer drehfest verbundene Verstelleinheit umfasst, wobei die Antriebseinheit und die Verstelleinheit zum reversiblen Verlagern des Messers zwischen der Ruhestellung und der Arbeitsstellung miteinander wirkverbunden sind.

Gemäß einer vorteilhaften Weiterbildung der Erfindung ist vorgesehen, dass die Antriebseinheit eine an dem Gehäuse der Rundballenpresse befestigte Halterung, ein mit dem Aktuator antriebsverbundenes erstes Übertragungselement, ein zweites Übertragungselement, einen federbelasteten Hebel und ein Auflagerelement umfasst, wobei das erste Übertragungselement, das zweite Übertragungselement und der federbelastete Hebel jeweils drehbeweglich an der Halterung gelagert sind, wobei das erste Übertragungselement und das zweite Übertragungselement miteinander verbunden sind, sodass diese eine gemeinsame Drehbewegung bei einem Antrieb des ersten Übertragungselements mittels des Aktuators ausführen, wobei das erste Übertragungselement ein Betätigungselement umfasst, welches dazu vorgesehen und eingerichtet ist, mit dem federbelasteten Hebel bei einem Antrieb des ersten Übertragungselements mittels des Aktuators zusammenzuwirken.

Gemäß einer vorteilhaften Weiterbildung der Erfindung ist vorgesehen, dass die Verstelleinheit eine an dem Gehäuse der Rundballenpresse zwischen einer ersten Endstellung und einer zweiten Endstellungen schwenkbar gelagerte Stellscheibe umfasst, welche mit dem Messer drehfest verbunden ist, wobei sich das Messer in der ersten Endstellung der Stellscheibe in der Ruhestellung und in der zweiten Endstellung der Stellscheibe in der Arbeitsstellung befindet, wobei die Stellscheibe zumindest ein in einem äußeren Randbereich der Stellscheibe drehfest angeordnetes Kontaktelement umfasst, wobei die Verstelleinheit einen federbelasteten Hebel umfasst, welcher drehbeweglich an der Stellscheibe gelagert ist.

Der konstruktive Aufbau der Verstellvorrichtung mit Antriebseinheit und Verstelleinheit erlaubt eine besonders gute Integration der Verstellvorrichtung in die Rundballenpresse. Die verschiedenen Einheiten der Verstellvorrichtung können seitlich im Bereich der Bindeeinrichtung der Rundballenpresse derart angeordnet werden, dass die Bauraumvorgaben der Rundballenpresse hinsichtlich der Breite eingehalten werden können. Die anderen Arbeitsaggregate der Rundballenpresse müssen somit baulich nicht verändert werden, um zusätzlichen Bauraum für die Integration der Verstellvorrichtung zu schaffen. Weiterhin erlaubt der Aufbau der Verstellvorrichtung eine unkomplizierte Wartung der einzelnen Komponenten, da diese bei einem Entfernen der Verkleidung der Rundballenpresse gut zugänglich sind.

Gemäß einer vorteilhaften Weiterbildung der Erfindung ist vorgesehen, dass die Stellscheibe in ihrer ersten Endstellung mittels eines Federelements vorgespannt ist, wobei der federbelastete Hebel der Verstelleinheit in der ersten Endstellung der Stellscheibe auf dem Auflagerelement der Antriebseinheit aufliegt, sodass die Stellscheibe in ihrer ersten Stellung arretiert ist.

Gemäß einer vorteilhaften Weiterbildung der Erfindung ist vorgesehen, dass das Betätigungselement des ersten Übertragungselements bei einem Antrieb des ersten Übertragungselements mittels des Aktuators dazu vorgesehen und eingerichtet ist, den federbelasteten Hebel der Antriebeinheit derart zu verlagern, dass sich der federbelastete Hebel der Verstelleinheit aufgrund eines Kontakts mit dem federbelasteten Hebel der Antriebseinheit von dem Auflagerelement löst, wodurch die Stellscheibe aus ihrer ersten Endstellung in ihrer zweite Endstellung verlagert wird.

Gemäß einer vorteilhaften Weiterbildung der Erfindung ist vorgesehen, dass das zweite Übertragungselement bei einem Antrieb des ersten Übertragungselements mittels des Aktuators dazu vorgesehen und eingerichtet ist, mit dem zumindest einen Kontaktelement der Stellscheibe zusammenzuwirken, und zwar derart, dass die Stellscheibe aus der zweiten Endstellung in die erste Endstellung verlagert wird.

Der konstruktive Aufbau der einzelnen Einheiten der Verstellvorrichtung und die Kopplung der Elemente dieser Einheiten miteinander sorgt dafür, dass das Messer zuverlässig in den jeweiligen Stellungen während des Verlagerungsprozesses arretiert werden kann, sodass keine Fehlauslösung des Messers während des Betriebs der Rundballenpresse, insbesondere während eines Bindevorgangs, erfolgen kann. Gleichzeitig wird durch die Kopplung sichergestellt, dass bei einem Auslösen eines Schneidvorgangs durch Aktivieren des Aktuators das Messer zuverlässig derart beschleunigt wird, dass ein sauberes Durchtrennen des Bindematerials zum Abschluss des Bindevorgangs des Rundballens erfolgen kann, das Messer aber auch wieder schnell in die Ruhestellung verlagert wird, sodass der Weg für das Bindematerial beim Bindevorgang eines nachfolgenden Rundballens frei ist.

Gemäß einer vorteilhaften Weiterbildung der Erfindung ist vorgesehen, dass auf einer von dem Aktuator ausgehenden Welle ein Übertragungselement angeordnet ist, welches mit dem ersten Übertragungselement der Antriebseinheit wirkverbunden ist.

Gemäß einer vorteilhaften Weiterbildung der Erfindung ist vorgesehen, dass ein Übersetzungsverhältnis zwischen dem auf der von dem Aktuator ausgehenden Welle angeordneten Übertragungselement und dem ersten Übertragungselement der Antriebseinheit derart gewählt ist, dass bei einer vollständigen Umdrehung des ersten Übertragungselements die Stellscheibe aus ihrer ersten Endstellung in ihre zweite Endstellung und aus ihrer zweiten Endstellung zurück in ihre erste Endstellung bewegt wird.

Gemäß einer vorteilhaften Weiterbildung der Erfindung ist vorgesehen, dass das erste Übertragungselement der Antriebseinheit als Stirnrad, das zweite Übertragungselement der Antriebeinheit als Teilkettenrad und das auf der von dem Aktuator ausgehenden Welle angeordnete Übertragungselement als Ritzel ausgebildet ist.

Die Wahl der Ausgestaltung der einzelnen Übertragungselemente und des Übersetzungsverhältnisses der Übertragungselemente sorgte dafür, dass nach Abschluss des Bindevorgangs des Rundballens in der Pressekammer ein schnelles Durchtrennen des Bindematerials erfolgen kann, sodass der gebundene Rundballen schnell aus der Pressekammer ausgeworfen werden und das Pressen eines nachfolgenden Rundballens unmittelbar beginnen kann. Durch die erfindungsgemäße Verstellvorrichtung, insbesondere die Ausgestaltung der Übertragungselemente der Antriebseinheit, die mit dem Aktuator gekoppelt sind, kann demnach sichergestellt werden, dass die Rundballenpresse mit einer hohen Produktivität und Qualität der gepressten und gebundenen Rundballen betrieben werden kann.

Gemäß einer vorteilhaften Weiterbildung der Erfindung ist vorgesehen, dass die Verstellvorrichtung einen Sensor umfasst, welcher dazu vorgesehen und eingerichtet ist, die erste Endstellung der Stellscheibe zu detektieren.

Gemäß einer vorteilhaften Weiterbildung der Erfindung ist vorgesehen, dass die Rundballenpresse eine Steuereinrichtung umfasst, welche zumindest mit dem Sensor und dem Aktuator zur Übertragung von Daten verbunden ist, wobei die Steuereinrichtung dazu vorgesehen und eingerichtet ist, den Betrieb des Aktuators zu steuern, wobei die Steuereinrichtung dazu vorgesehen und eingerichtet ist, bei einer Detektion der ersten Endstellung der Stellscheibe mittels des Sensors den Betrieb des Aktuators zu stoppen.

Die Verwendung eines Sensors zur Bestimmung des Erreichens der ersten Endstellung durch die Stellscheibe und somit eines Abschlusses des Verlagerungsvorgangs des Messers ist eine besonders einfache Möglichkeit eine präzise Ansteuerung des Aktuators sicherzustellen. Die Steuereinrichtung, die Daten von dem Sensor erhält und die Daten bzw. Steuersignale an den Aktuator überträgt und gegebenenfalls mit einer Steuereinrichtung, die auf einem Traktor vorgesehen ist, in dem sich der Bediener befindet, oder weiteren Sensoren der Rundballenpresse zur Übertragung von Daten gekoppelt ist, sorgt für eine Betätigung der Trennvorrichtung zu jedem Zeitpunkt während des Betriebs der Rundballenpresse, ohne dass der Bediener manuell in den Trennvorgang eingreifen muss. Vielmehr kann der Bediener, wenn er ein Signal erhält, dass der Rundballen fertig gebunden ist, die Trennvorrichtung und somit den Trennvorgang auslösen, indem er über eine Eingabeeinheit im Traktor einen Befehl auslöst, wodurch die Steuereinrichtung des Traktors der Steuereinrichtung der Rundballenpresse einen Befehl zur Ansteuerung des Aktuators gibt. Alternativ kann die Steuereinrichtung der Rundballenpresse auch von den weiteren Sensoren der Rundballenpresse eine Information betreffend den Abschluss eines Bindevorgangs des Rundballens erhalten und den Trennvorgang durch Ansteuerung des Aktuators der Verstellvorrichtung automatisch auslösen. Sobald der Sensor das Erreichen der ersten Endstellung durch die Stellscheibe detektiert, erhält die Steuereinrichtung der Rundballenpresse eine entsprechende Information hierüber von dem Sensor und stoppt den Betrieb des Aktuators, wodurch der Trennvorgang, also die reversible Verlagerung des Messers zwischen der Ruhestellung und der Arbeitsstellung, abgeschlossen ist.

Gemäß einer vorteilhaften Weiterbildung der Erfindung ist vorgesehen, dass der Aktuator ein Elektromotor oder ein hydraulischer Motor ist.

Die vorliegende Erfindung wird nachstehend anhand der in den Figuren abgebildeten Ausführungsformen näher beschrieben.

Es zeigen:
- FIG. 1:: eine schematische und exemplarische Darstellung einer erfindungsgemäßen Rundballenpresse;
- FIG. 2:: verschiedene schematische und exemplarische Ansichten von Einheiten einer Verstellvorrichtung für ein Messer einer Trennvorrichtung der Rundballenpresse aus FIG. 1;
- FIG. 3:: eine schematische und exemplarische Darstellung der an die Rundballenpresse montierten Verstellvorrichtung aus FIG. 2 in einer ersten Endstellung;
- FIG. 4:: eine schematische und exemplarische Darstellung der an die Rundballenpresse montierten Verstellvorrichtung aus FIG. 2 in einer zweiten Endstellung; und
- FIG. 5:: eine schematische und exemplarische Darstellung der an die Rundballenpresse montierten Verstellvorrichtung aus FIG. 2 während einer Verlagerung aus der zweiten Endstellung zurück in die erste Endstellung.

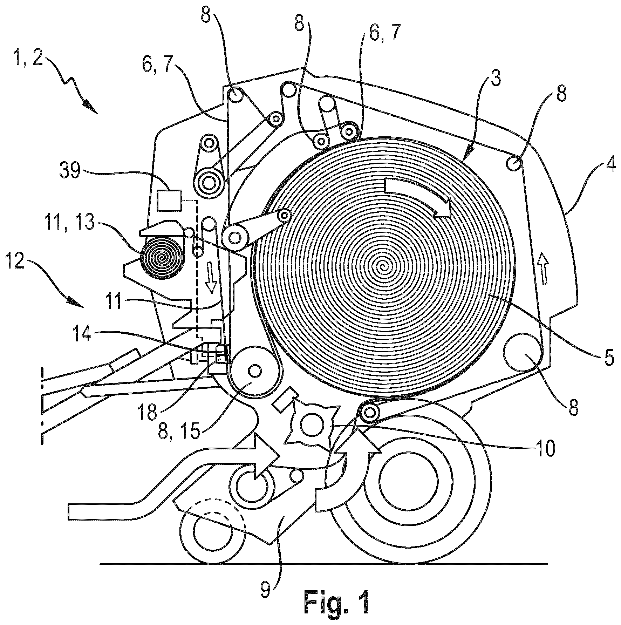

FIG. 1 zeigt eine schematische und exemplarische Darstellung einer landwirtschaftlichen Ballenpresse 1 in Form einer Rundballenpresse 2, welche eine Presskammer 3 in einem Gehäuse 4 aufweist. Die Ballenpresse 1 bzw. Rundballenpresse 2 kann mit einem in den FIGs. nicht dargestellten Zugfahrzeug, vorzugsweise in Form eines Traktors, gekoppelt werden, wobei der Traktor und somit das aus dem Traktor und der mit diesem gekoppelten Ballenpresse 1 gebildete Gespann von einem - in den FIGs. nicht dargestellten - Bediener gesteuert werden. Zum Pressen eines Rundballens 5 weist die Rundballenpresse 2 zumindest ein Pressmittel 6 auf, welches gemäß der in FIG. 1 dargestellten Ausführungsform der Rundballenpresse 2 als ein endlos umlaufendes Pressmittel 7 ausgeführt ist. Das endlos umlaufende Pressmittel 7 kann aus einem oder mehreren Pressriemen oder Ketten gebildet werden. Das endlos umlaufende Pressmittel 7 wird mittels einer Mehrzahl an Rollen 8 geführt, wobei die Rollen 8 ortsfest oder variabel angeordnet sein können. Alternativ kann das zumindest eine Pressmittel 6 auch als Presswalze ausgeführt sein. Über eine Aufnahmeeinrichtung 9, auch als Pick-up bezeichnet, wird Erntegut aufgenommen, an einem Drehelement 10 in Form eines Rotors entlang geleitet, wobei das Erntegut zerkleinert werden kann, und in die Presskammer 3 eingeleitet, in welcher das Erntegut verdichtet und zu einem Rundballen 5 gepresst bzw. geformt wird.

Ein fertig gepresster Rundballen 5 wird üblicherweise vor einem Auswerfen aus der Presskammer 3 mit einem Bindematerial 11, welches als Folie, Netz oder dergleichen ausgebildet sein kann, umhüllt, um den Rundballen 5 zu stabilisieren und ein Auseinanderfallen des Rundballens 5 zu vermeiden. Hierfür weist die Rundballenpresse 2 eine Bindeeinrichtung 12 auf, mittels welcher das Bindematerial 11, welches auf einer in der Bindeeinrichtung 12 angeordneten Bindematerialvorratsrolle 13 bevorratet wird, über einen umfangsseitig der Presskammer 3 ausgebildeten Zuführspalt 14 in die Presskammer 3 zugeführt wird. Das Bindematerial 11 wird dabei mit einer Rolle 15, welche den Zuführspalt 14 an einer Seite begrenzt, in Anlage gebracht und durch die Drehbewegung der Rolle 15 in die Presskammer 3 gefördert, um den Rundballen 5 im Wesentlichen radial außenseitig und/oder randseitig zu umhüllen. Um das Binden zu verbessern, wird das Bindematerial 11 üblicherweise vorgestreckt und vorgespannt um den Rundballen 5 gewickelt. Zum Vorspannen des Bindematerials 5 ist eine - in den FIGs. nicht dargestellte - Bremseinheit vorgesehen, welche das Bindematerial 11 verzögert, bevor es in die Presskammer 3 eingeführt wird. Nach einer Umhüllung des Rundballens 5 mit einer gewünschten Menge an Bindematerial 11 wird das Bindematerial 11 durchtrennt. Zum Durchtrennen des Bindematerials 11 umfasst die Bindeeinrichtung 12 eine Trennvorrichtung 16, welche ein zwischen einer Ruhestellung R_{M} und einer Arbeitsstellung A_{M} reversibel verlagerbares Messer 17 zum Durchtrennen des Bindematerials 11 aufweist.

Wesentlich ist nunmehr, dass die Trennvorrichtung 16 eine Verstellvorrichtung 18 mit einem Aktuator 19 zum reversiblen Verlagern des Messers 17 zwischen der Ruhestellung R_{M} und der Arbeitsstellung Ann umfasst, wobei die Verstellvorrichtung 18 mit dem Messer 17 der Trennvorrichtung 16 gekoppelt ist. Der Aktuator 19 kann wahlweise als Elektromotor oder als hydraulischer Motor ausgebildet sein. Gemäß der in den FIGs. dargestellten und insofern bevorzugten Ausführungsform umfasst die Verstellvorrichtung 18 genau einen Aktuator 19 zum reversiblen Verlagern des Messers 17 zwischen der Ruhestellung R_{M} und der Arbeitsstellung Ann.

Über die Verstellvorrichtung 18 mit dem einen Aktuator 19 ist es demnach möglich, das Messer 17 der Trennvorrichtung 16 reversibel zwischen der Ruhestellung R_{M} und der Arbeitsstellung A_{M} zu verlagern, ohne dass ein Antrieb weiterer Arbeitsaggregate, beispielsweise der Bindeeinrichtung 12, der Aufnahmeeinrichtung 9, des Drehelements 10 oder dergleichen, und/oder ein manueller Eingriff des Bedieners in die Trennvorrichtung 16 erforderlich ist. Das Messer 17 der Trennvorrichtung 16 kann somit zu jedem Zeitpunkt während des Betriebs der Rundballenpresse 2 losgelöst von den weiteren Arbeitsaggregaten der Rundballenpresse 2 aufgrund des einen Aktuators 19 reversibel zwischen der Ruhestellung R_{M} und der Arbeitsstellung A_{M} verlagert werden.

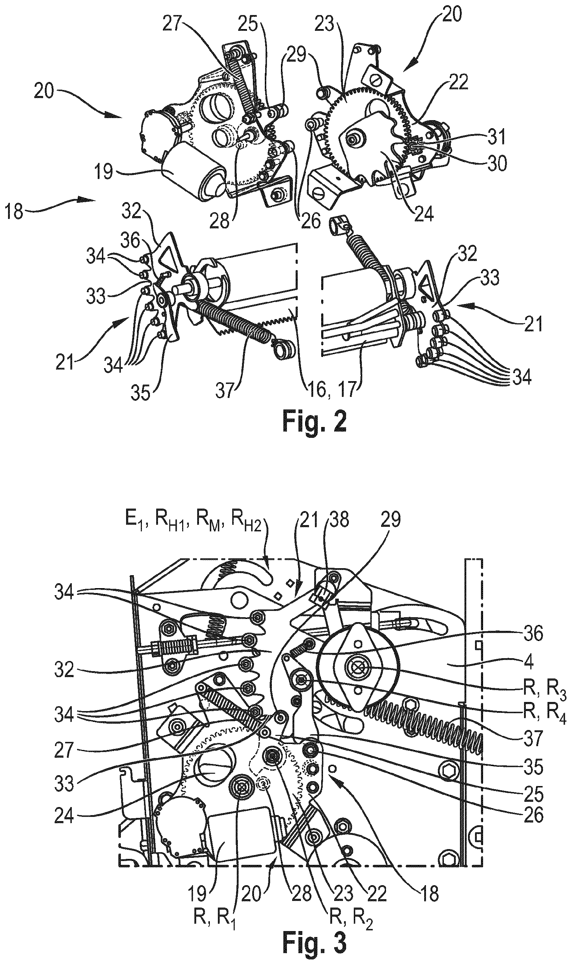

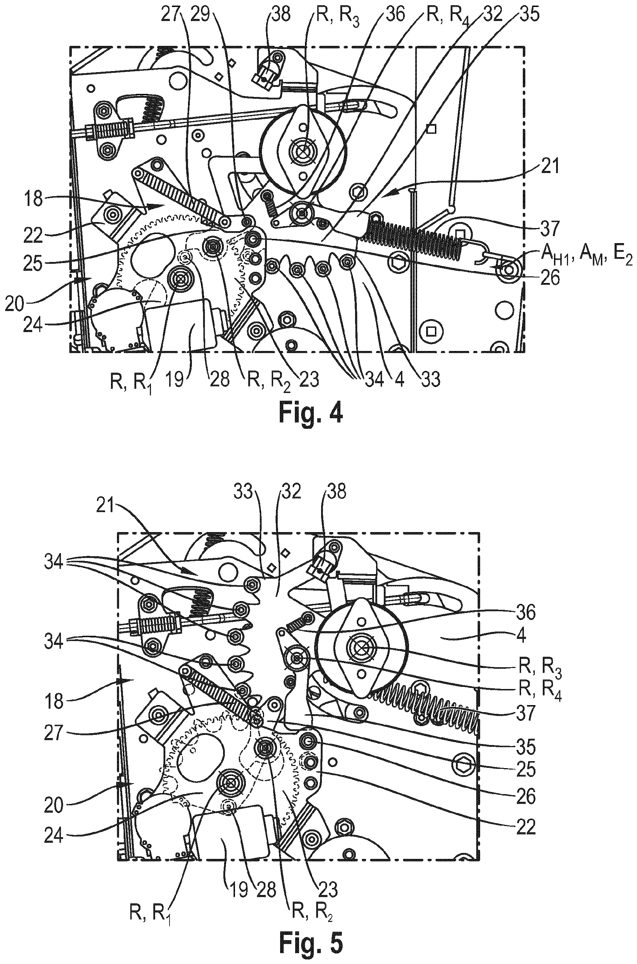

Nachfolgend werden die Einzelheiten der Verstellvorrichtung 18 mit dem Aktuator 19 unter Bezugnahme auf die FIGs. 2 bis 5 beschrieben.

Die Verstellvorrichtung 18 umfasst neben dem einen Aktuator 19 eine Antriebseinheit 20 und eine Verstelleinheit 21, welche zum reversiblen Verlagern des Messers 17 der Trennvorrichtung 16 zwischen der Ruhestellung R_{M} und der Arbeitsstellung A_{M} miteinander wirkverbunden sind. Die Antriebseinheit 20 wird von dem Aktuator 19 angetrieben. Hierzu ist der Aktuator 19 mit der Antriebseinheit 20 antriebsverbunden. Die Verstelleinheit 21 ist mit dem Messer 17 der Trennvorrichtung 16 drehfest verbunden, sodass sich das Messer 17 und die Verstelleinheit 21 gemeinsam bewegen können.

Die Antriebseinheit 20 umfasst eine an dem Gehäuse 4 der Rundballenpresse befestigte bzw. montierte Halterung 22. Weiterhin umfasst die Antriebseinheit 20 ein mit dem Aktuator 19 antriebsverbundenes, als Zahnrad ausgebildetes, erstes Übertragungselement 23, ein, als Teilkettenrad ausgebildetes, zweites Übertragungselement 24, einen federbelasteten Hebel 25 und ein Auflagerelement 26. Das erste Übertragungselement 23, das zweite Übertragungselement 24 und der federbelastete Hebel 25 sind allesamt drehbeweglich an der Halterung 22 gelagert, sodass diese jeweils um Rotationsachsen R relativ zur Halterung 22 rotieren können. Das erste Übertragungselement 23 und das zweite Übertragungselement 24 sind ferner miteinander verbunden, sodass sich beide Übertragungselemente 23, 24 bei einem Antrieb des ersten Übertragungselements 23 mittels des einen Aktuators 19 gemeinsam um eine gemeinsame Rotationsachse R₁ drehen. Beide Übertragungselemente 23, 24 sind dabei ausgehend von der Halterung 22 in Richtung ihrer Rotationsachse R₁ voneinander beabstandet positioniert, wobei ausgehend von der Halterung 22 zunächst das erste Übertragungselement 23 und dann das zweite Übertragungselement 24 angeordnet ist. Der federbelastete Hebel 25 ist um einer Rotationsachse R₂ drehbeweglich an der Halterung 22 gelagert und über ein an der Halterung 22 befestigtes, als Schraubenfeder ausgebildetes, Federelement 27 in einer Ruhestellung R_{H1}, in welcher das Federelement 27 unbelastet ist, positioniert. Das erste Übertragungselement 23 umfasst weiterhin ein Betätigungselement 28, welches drehfest an dem ersten Übertragungselement 23 angeordnet ist, sodass dieses bei einem Antrieb des ersten Übertragungselements 23 mittels des einen Aktuators 19 gemeinsam mit dem ersten Übertragungselement 23 um die Rotationsachse R₁ rotiert. Das Betätigungselement 28 ist dazu vorgesehen und eingerichtet, mit dem federbelasteten Hebel 25 bei einem Antrieb des ersten Übertragungselements 23 mittels des einen Aktuators 19 zusammenzuwirken. Das Betätigungselement 28 ist dabei so an dem ersten Übertragungselement 23 angeordnet, dass es bei einer mittels des einen Aktuators 19 erwirkten Rotationsbewegung des ersten Übertragungselements 23 um die Rotationsachse R₁ den federbelasteten Hebel 25 entgegen der mittels des Federelements 27 aufgebrachten Federkraft aus der Ruhestellung R_{H1} in eine Arbeitsstellung A_{H1}, verlagert, in welcher der federbelastete Hebel 25 über ein endseitig an diesem angebrachtes Kontaktelement 29 mit der Verstelleinheit 21 zusammenwirkt. Das Auflagerelement 26 der Antriebseinheit 20 ist drehfest an der Halterung 22 befestigt bzw. mit der Halterung 22 verbunden und benachbart zu den beiden Übertragungselementen 23, 24 an der Halterung 22 angeordnet. Zum Antrieb des ersten Übertragungselements 23 ist auf einer von dem einen Aktuator 19 ausgehenden Welle 30 ein als Ritzel ausgebildetes Übertragungselement 31 angeordnet, welches mit dem, als Zahnrad ausgebildeten, ersten Übertragungselement 23 zum Antrieb desselben über einen kämmenden Eingriff wirkverbunden ist.

Die Verstelleinheit 21 umfasst eine an dem Gehäuse 4 der Rundballenpresse 2 zwischen einer ersten Endstellung E₁ und einer zweiten Endstellung E₂ um eine Rotationsachse R₃ schwenkbar gelagerte Stellscheibe 32. Die Stellscheibe 32 ist mit dem Messer 17 der Trennvorrichtung 16 drehfest verbunden, sodass sich das Messer 17 bei einer Bewegung der Stellscheibe 32 um die Rotationsachse R₃ gemeinsam mit der Stellscheibe 32 bewegt bzw. gemeinsam mit der Stellscheibe 32 verlagert wird. Das Messer 17 befindet sich dabei in der ersten Endstellung E₁ der Stellscheibe 32 in der Ruhestellung R_{M} und in der zweiten Endstellung E₂ der Stellscheibe 32 in der Arbeitsstellung Ann. Ein Verschwenken der Stellscheibe 32 aus der ersten Endstellung E₁ in die zweite Endstellung E₂ bewirkt demnach eine Verlagerung des Messers 17 aus der Ruhestellung R_{M} in die Arbeitsstellung Ann. Ein Verschwenken der Stellscheibe 32 aus der zweiten Endstellung E₂ in die erste Endstellung E₁ bewirkt demnach eine Verlagerung des Messers 17 aus der Arbeitsstellung A_{M} in die Ruhestellung Rnn. Die Stellscheibe 32 umfasst in einem äußeren Randbereich 33 eine Vielzahl an, hier sechs, drehfest angeordneten Kontaktelementen 34, die voneinander in Umfangsrichtung U der Stellscheibe 32 beabstandet sind. Die Stellscheibe 32 umfasst ferner einen federbelasteten Hebel 35, welcher drehbeweglich um eine Rotationsachse R₄ an der Stellscheibe 32 gelagert und über ein an der Halterung 22 befestigtes als Schraubenfeder ausgebildetes Federelement 36 in einer Ruhestellung R_{H2}, in welcher die Schraubenfeder unbelastet ist, positioniert ist. Die Stellscheibe 32 ist weiterhin mit einem als Schraubenfeder ausgebildeten Federelement 37 gekoppelt, welches an dem Gehäuse 4 der Rundballenpresse 2 oder einer anderen Komponente der Rundballenpresse 2 befestigt ist.

Die Arbeitsweise der Verstellvorrichtung 18 wird nachfolgend, insbesondere mit Verweis auf die FIGs. 3 bis 5, in welchen allerdings die Trennvorrichtung 16 bzw. das Messer 17 der Trennvorrichtung 16 durch die Elemente der Verstellvorrichtung 18 und das Gehäuse 4 der Rundballenpresse 2 verdeckt ist, beschrieben.

In der ersten Endstellung E₁ der Stellscheibe 32, also in der Stellung der Stellscheibe 32, in welcher das Messer 17 der Trennvorrichtung 16 in der Ruhestellung Rm positioniert ist, ist die Stellscheibe 32 mittels des Federelements 37 vorgespannt, wobei der federbelastete Hebel 35 auf dem Auflagerelement 26 der Antriebseinheit 20 aufliegt, sodass sich die Stellscheibe 32 nicht aus ihrer ersten Endstellung E₁ bewegen kann, die Stellscheibe 32 somit in der ersten Endstellung E₁ arretiert ist. Wird nunmehr der eine Aktuator 19 in Betrieb genommen und das erste Übertragungselement 23 der Antriebseinheit 20 angetrieben, gelangt das an dem ersten Übertragungselement 23 drehfest angeordnete Betätigungselement 28 mit dem federbelasteten Hebel 25 der Antriebseinheit 20 in Kontakt, wodurch dieser entgegen der mittels des Federelements 27 aufgebrachten Federkraft aus der Ruhestellung R_{H1} in die Arbeitsstellung A_{H1} bewegt wird. Bei dieser Bewegung gelangt der federbelastete Hebel 25 mit seinem Kontaktelement 29 mit dem federbelasteten Hebel 35 der Verstelleinheit 21 in Kontakt, wodurch der auf dem Auflagerelement 26 der Antriebseinheit 20 aufliegende federbelastete Hebel 35 der Verstelleinheit 21 entgegen der mittels des Federelements 36 aufgebrachten Federkraft aus der Ruhestellung R_{H2} bewegt wird und sich von dem Auflagerelement 26 löst. Die Stellscheibe 32 bewegt sich hierdurch aufgrund der durch das Federelement 37 wirkenden Vorspannung schlagartig aus der ersten Endstellung E₁ in die zweite Endstellung E₂, wodurch auch das Messer 17 der Trennvorrichtung 16 schlagartig aus der Ruhestellung R_{M} in die Arbeitsstellung A_{M} verlagert wird und das Bindematerial 11 mittels des Messers 17 durchtrennt wird. Sobald sich der federbelastete Hebel 35 der Verstelleinheit 21 von dem Auflagerelement 26 der Antriebseinheit 20 gelöst hat und die Stellscheibe 32 in Bewegung ist, wird der federbelastete Hebel 35 der Verstelleinheit 20 aufgrund der mittels des Federelements 36 wirkenden Federkraft zurück in die Ruhestellung R_{H2} bewegt.

Der eine Aktuator 19 treibt währenddessen fortwährend das erste Übertragungselement 23 an, wodurch zunächst das Betätigungselement 28 und der federbelastete Hebel 25 wieder außer Kontakt gelangen und sich der federbelastete Hebel 25 zurück in die Ruhestellung R_{H1} bewegt. Aufgrund der Kopplung von erstem Übertragungselement 23 und zweitem Übertragungselement 24 rotieren beide Übertragungselemente 23, 24 synchron miteinander. Aufgrund der Winkelstellung des zweiten Übertragungselements 24 relativ zum ersten Übertragungselement 23 gelangt das zweite Übertragungselement 24 dann in Kontakt mit dem ersten Kontaktelement 34 der Stellscheibe 32, wodurch die beiden Elemente 24, 34 zusammenwirken. Durch den kontinuierlichen Antrieb des ersten Übertragungselements 23 mittels des einen Aktuators 19 bewegt das zweite Übertragungselement 24 die Stellscheibe 32 über das Zusammenwirken mit den in Umfangsrichtung U der Stellscheibe 32 beabstandeten Kontaktelementen 34, dass sich die Stellscheibe 32 entgegen der mittels des Federelements 37 aufgebrachten Federkraft aus der zweiten Endstellung E₂ zurück in die erste Endstellung E₁ bewegt, wodurch sich das Messer 17 der Trennvorrichtung 16 zurück aus der Arbeitsstellung A_{M} in die Ruhestellung R_{M} verlagert.

Sobald sich die Stellscheibe 32 wieder in der ersten Endstellung E₁ befindet, wird der eine Aktuator 19 gestoppt, sodass das erste Übertragungselement 23 der Antriebseinheit 20 nicht weiter angetrieben wird. Der federbelastete Hebel 35 der Verstelleinheit 21 gelangt hierdurch wieder mit dem Auflagerelement 26 der Antriebseinheit 20 in Anlage, wodurch die Stellscheibe in der ersten Endstellung E₁ und somit das Messer 17 der Trennvorrichtung 16 in der Ruhestellung R_{M} arretiert wird.

Das Übersetzungsverhältnis von dem auf der von dem einen Aktuator 19 ausgehenden Welle 30 angeordneten Übertragungselement 31 und dem ersten Übertragungselement 23 der Antriebseinheit 20 ist dabei derart gewählt, dass bei einer vollständigen Umdrehung des ersten Übertragungselements 23 die Stellscheibe 32 aus der ersten Endstellung E₁ in die zweite Endstellung E₂ und aus der zweiten Endstellung E₂ zurück in die erste Endstellung E₁ bewegt wird, wodurch das Messer 17 der Trennvorrichtung 16 aus der Ruhestellung R_{M} in die Arbeitsstellung A_{M} und aus der Arbeitsstellung A_{M} zurück in die Ruhestellung Rm verlagert wird.

Um das Erreichen der ersten Endstellung E₁ durch die Stellscheibe 32 zu detektieren, umfasst die Verstellvorrichtung 18 einen Sensor 38. Mit anderen Worten, die Verstellvorrichtung 18 umfasst den Sensor 38, welcher dazu vorgesehen und eingerichtet ist, die erste Endstellung E₁ der Stellscheibe 32 zu detektieren. Der Sensor 38 ist vorzugsweise als berührungslos arbeitender Sensor ausgebildet, wobei das Erreichen der ersten Endstellung E₁ durch die Stellscheibe 32 detektiert wird, indem die Stellscheibe 32 in den Detektionsbereich des Sensors 38 gelangt. Alternativ kann der Sensor 38 auch als berührend arbeitender Sensor ausgebildet sein, wobei das Erreichen der ersten Endstellung E₁ durch die Stellscheibe 32 bei einer solchen Ausgestaltung detektiert wird, indem die Stellscheibe 32 den Sensors 38 kontaktiert.

Die Rundballenpresse 2 umfasst weiterhin eine Steuereinrichtung 39, welche mit dem Sensor 38 und dem einen Aktuator 19 zur Übertragung von Daten verbunden ist. Die Steuereinrichtung 39 ist weiterhin dazu vorgesehen und eingerichtet, mit einer auf einer vorzugsweise als Traktor ausgebildeten Zugmaschine vorhandene Steuereinrichtung zur Übertragung von Daten zu kommunizieren, insbesondere von dieser Steuersignale zu empfangen, und/oder mit weiteren Sensoren der Rundballenpresse 2 zur Übertragung von Daten zu kommunizieren. Die Steuereinrichtung 39 der Rundballenpresse 2 ist dazu vorgesehen und eingerichtet, den Betrieb des einen Aktuators 19 zu steuern. Hierzu empfängt die Steuereinrichtung 39 wahlweise von einem Sensor der Rundballenpresse 2 und/oder mittels eines von der Steuereinrichtung der Zugmaschine gesendeten Steuersignals, welches auf eine Eingabe des Bedieners des Gespanns zurückgeht, eine Information, dass der Bindevorgang eines Rundballens 5 in der Presskammer 3 der Rundballenpresse 2 abgeschlossen ist. Die Steuereinrichtung 39 steuert daraufhin den einen Aktuator 19 an, wodurch dieser das erste Übertragungselement 23 der Antriebseinheit 20 zum reversiblen Verlagern des Messers 17 der Trennvorrichtung 16 antreibt. Sobald der Sensor 38 detektiert, dass sich das Stellelement 32 wieder in der ersten Endstellung E₁ befindet, der reversible Verlagerungsvorgang des Messers 17 somit abgeschlossen ist, steuert die Steuereinrichtung 39 basierend auf dem vom dem Sensor 38 bereitgestellten Sensorsignal dann den einen Aktuator 19 derart an, dass dieser und somit der Antrieb des ersten Übertragungselements 23 der Antriebseinheit 20 gestoppt wird.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Ballenpresse | 28 | Betätigungselement |
| 2 | Rundballenpresse | 29 | Kontaktelement |
| 3 | Presskammer | 30 | Welle |
| 4 | Gehäuse | 31 | Übertragungselement |
| 5 | Rundballen | 32 | Stellscheibe |
| 6 | Pressmittel | 33 | Randbereich |
| 7 | Endlos umlaufendes Pressmittel | 34 | Kontaktelement |
| 8 | Rolle | 35 | Hebel |
| 9 | Aufnahmevorrichtung | 36 | Federelement |
| 10 | Drehelement | 37 | Federelement |
| 11 | Bindematerial | 38 | Sensor |
| 12 | Bindeeinrichtung | 39 | Steuereinrichtung |
| 13 | Bindematerialvorratsrolle | | |
| 14 | Zuführspalt | R_{M} | Ruhestellung Messer |
| 15 | Rolle | A_{M} | Arbeitsstellung Messer |
| 16 | Trennvorrichtung | R_{H1} | Ruhestellung Hebel |
| 17 | Messer | A_{H1} | Arbeitsstellung Hebel |
| 18 | Verstellvorrichtung | R_{H2} | Ruhestellung Hebel |
| 19 | Aktuator | E₁ | Endstellung |
| 20 | Antriebseinheit | E₂ | Endstellung |
| 21 | Verstelleinheit | R | Rotationsachse |
| 22 | Halterung | R₁ | Rotationsachse |
| 23 | Übertragungselement | R₂ | Rotationsachse |
| 24 | Übertragungselement | R₃ | Rotationsachse |
| 25 | Hebel | R₄ | Rotationsachse |
| 26 | Auflagerelement | | |
| 27 | Federelement | | |

## Patentansprüche

1. Rundballenpresse (2) mit einer in einem Gehäuse (4) der Rundballenpresse (2) angeordneten Presskammer (3), zum Pressen von Rundballen (5) aus einem Erntegut, einer Bindeeinrichtung (12) zum Bereitstellen eines Bindematerials (11) zum Binden eines Rundballens (5) in der Presskammer (3), wobei umfangsseitig der Presskammer (3) mindestens ein Zuführspalt (14) zum Zuführen des Bindematerials (11) in die Presskammer (3) ausgebildet ist, wobei die Bindeeinrichtung (12) eine Trennvorrichtung (16) umfasst, welche ein zwischen einer Ruhestellung (R_{M}) und einer Arbeitsstellung (A_{M}) reversibel verlagerbares Messer (17) zum Durchtrennen des Bindematerials (11) aufweist, **dadurch gekennzeichnet, dass** die Trennvorrichtung (16) eine mit dem Messer (17) gekoppelte Verstellvorrichtung (18) mit einem Aktuator (19) zum reversiblen Verlagern des Messers (17) zwischen der Ruhestellung (R_{M}) und der Arbeitsstellung (A_{M}) umfasst.

2. Rundballenpresse (2) nach Anspruch 1, **dadurch gekennzeichnet, dass** die Verstellvorrichtung (18) genau einen Aktuator (19) umfasst.

3. Rundballenpresse (2) nach Anspruch 1 oder 2, **dadurch gekennzeichnet, dass** die Verstellvorrichtung (18) eine mit dem Aktuator (19) antriebsverbundene Antriebseinheit (20) und eine mit dem Messer (17) drehfest verbundene Verstelleinheit (21) umfasst, wobei die Antriebseinheit (20) und die Verstelleinheit (21) zum reversiblen Verlagern des Messers (17) zwischen der Ruhestellung (Rnn) und der Arbeitsstellung (A_{M}) miteinander wirkverbunden sind.

4. Rundballenpresse (2) nach Anspruch 3, **dadurch gekennzeichnet, dass** die Antriebseinheit (20) eine an dem Gehäuse (4) der Rundballenpresse (2) befestigte Halterung (22), ein mit dem Aktuator (19) antriebsverbundenes erstes Übertragungselement (23), ein zweites Übertragungselement (24), einen federbelasteten Hebel (25) und ein Auflagerelement (26) umfasst, wobei das erste Übertragungselement (23), das zweite Übertragungselement (24) und der federbelastete Hebel (25) jeweils drehbeweglich an der Halterung (22) gelagert sind, wobei das erste Übertragungselement (23) und das zweite Übertragungselement (24) miteinander verbunden sind, sodass diese eine gemeinsame Drehbewegung bei einem Antrieb des ersten Übertragungselements (23) mittels des Aktuators (19) ausführen, wobei das erste Übertragungselement (23) ein Betätigungselement (28) umfasst, welches dazu vorgesehen und eingerichtet ist, mit dem federbelasteten Hebel (25) bei einem Antrieb des ersten Übertragungselements (23) mittels des Aktuators (19) zusammenzuwirken.

5. Rundballenpresse (2) nach Anspruch 3 oder 4, **dadurch gekennzeichnet, dass** die Verstelleinheit (21) eine an dem Gehäuse (4) der Rundballenpresse (2) zwischen einer ersten Endstellung (E₁) und einer zweiten Endstellungen (E₂) schwenkbar gelagerte Stellscheibe (32) umfasst, welche mit dem Messer (17) drehfest verbunden ist, wobei sich das Messer (17) in der ersten Endstellung (E₁) der Stellscheibe (32) in der Ruhestellung (R_{M}) und in der zweiten Endstellung (E₂) der Stellscheibe (32) in der Arbeitsstellung (Ann) befindet, wobei die Stellscheibe (32) zumindest ein in einem äußeren Randbereich (33) der Stellscheibe (32) drehfest angeordnetes Kontaktelement (34) umfasst, wobei die Verstelleinheit (21) einen federbelasteten Hebel (35) umfasst, welcher drehbeweglich an der Stellscheibe (32) gelagert ist.

6. Rundballenpresse (2) nach Anspruch 4 in Kombination mit Anspruch 5, **dadurch gekennzeichnet, dass** die Stellscheibe (32) in ihrer ersten Endstellung (E₁) mittels eines Federelements (37) vorgespannt ist, wobei der federbelastete Hebel (35) der Verstelleinheit (21) in der ersten Endstellung (E₁) der Stellscheibe (32) auf dem Auflagerelement (26) der Antriebseinheit (20) aufliegt, sodass die Stellscheibe (32) in ihrer ersten Stellung (E₁) arretiert ist.

7. Rundballenpresse (2) nach Anspruch 6, **dadurch gekennzeichnet, dass** das Betätigungselement (28) des ersten Übertragungselements (23) bei einem Antrieb des ersten Übertragungselements (23) mittels des Aktuators (19) dazu vorgesehen und eingerichtet ist, den federbelasteten Hebel (25) der Antriebeinheit (20) derart zu verlagern, dass sich der federbelastete Hebel (35) der Verstelleinheit (21) aufgrund eines Kontakts mit dem federbelasteten Hebel (25) der Antriebseinheit (20) von dem Auflagerelement (26) löst, wodurch die Stellscheibe (32) aus ihrer ersten Endstellung (E₁) in ihrer zweite Endstellung (E₂) verlagert wird.

8. Rundballenpresse (2) nach Anspruch 4 in Kombination mit einem der Ansprüche 5 bis 7, **dadurch gekennzeichnet, dass** das zweite Übertragungselement (24) bei einem Antrieb des ersten Übertragungselements (23) mittels des Aktuators (19) dazu vorgesehen und eingerichtet ist, mit dem zumindest einen Kontaktelement (34) der Stellscheibe (32) zusammenzuwirken, und zwar derart, dass die Stellscheibe (32) aus der zweiten Endstellung (E₂) in die erste Endstellung (E₁) verlagert wird.

9. Rundballenpresse (2) nach einem der Ansprüche 4 bis 8, **dadurch gekennzeichnet, dass** auf einer von dem Aktuator (19) ausgehenden Welle (30) ein Übertragungselement (31) angeordnet ist, welches mit dem ersten Übertragungselement (23) der Antriebseinheit (20) wirkverbunden ist.

10. Rundballenpresse (2) nach Anspruch 9, **dadurch gekennzeichnet, dass** ein Übersetzungsverhältnis zwischen dem auf der von dem Aktuator (19) ausgehenden Welle (30) angeordneten Übertragungselement (31) und dem ersten Übertragungselement (23) der Antriebseinheit (20) derart gewählt ist, dass bei einer vollständigen Umdrehung des ersten Übertragungselements (23) die Stellscheibe (32) aus ihrer ersten Endstellung (E₁) in ihre zweite Endstellung (E₂) und aus ihrer zweiten Endstellung (E₂) zurück in ihre erste Endstellung (E₁) bewegt wird.

11. Rundballenpresse (2) nach Anspruch 9 oder 10, **dadurch gekennzeichnet, dass** das erste Übertragungselement (23) der Antriebseinheit (20) als Stirnrad, das zweite Übertragungselement (24) der Antriebeinheit (20) als Teilkettenrad und das auf der von dem Aktuator (19) ausgehenden Welle (30) angeordnete Übertragungselement (31) als Ritzel ausgebildet ist.

12. Rundballenpresse (2) nach einem der Ansprüche 5 bis 11, **dadurch gekennzeichnet, dass** die Verstellvorrichtung (18) einen Sensor (38) umfasst, welcher dazu vorgesehen und eingerichtet ist, die erste Endstellung (E₁) der Stellscheibe (32) zu detektieren.

13. Rundballenpresse (2) nach Anspruch 12, **dadurch gekennzeichnet, dass** die Rundballenpresse (2) eine Steuereinrichtung (39) umfasst, welche zumindest mit dem Sensor (38) und dem Aktuator (19) zur Übertragung von Daten verbunden ist, wobei die Steuereinrichtung (29) dazu vorgesehen und eingerichtet ist, den Betrieb des Aktuators (19) zu steuern, wobei die Steuereinrichtung (39) dazu vorgesehen und eingerichtet ist, bei einer Detektion der ersten Endstellung (E₁) der Stellscheibe (32) mittels des Sensors (38) den Betrieb des Aktuators (19) zu stoppen.

14. Rundballenpresse (2) nach einem der Ansprüche 1 bis 13, **dadurch gekennzeichnet, dass** der Aktuator (19) ein Elektromotor oder ein hydraulischer Motor ist.
